# EUROPEAN PATENT SPECIFICATION

(11) **EP 3 018 896 B1**
(45) Date of publication and mention of the grant of the patent: **30.12.2020**
(21) Application number: 14397530.8
(22) Date of filing: 07.11.2014
(51) Int. Cl.: H04N 7/10, H04B 3/04, H04N 7/173, H04N 21/61, H04H 60/97

(54) **APPARATUS FOR CONFIGURING COMMUNICATION-RELATED PARAMETERS**
VORRICHTUNG ZUR KONFIGURATION VON PARAMETERN IM ZUSAMMENHANG MIT KOMMUNIKATION
APPAREIL PERMETTANT DE CONFIGURER DES PARAMÈTRES RELATIFS À UNE COMMUNICATION

(43) Date of publication of application: 11.05.2016
(73) Proprietor: Teleste Oyj, 20660 Littoinen (FI)
(72) Inventor: Rumpunen, Toni, 21280 Raisio (FI); Fagerlund, Perttu, 20540 Turku (FI); Ketola, Tommi, 20540 Turku (FI); Halen, Sami, 20780 Kaarina (FI); Hilke, Pekka, 20200 Turku (FI)
(74) Representative: Berggren Oy, Tampere

(56) References cited:
- EP-A2- 1 359 696
- US-A1- 2005 114 879
- US-A1- 2012 044 361
- US-A1- 2014 282 783
- US-B1- 6 570 913
- US-B1- 6 678 893

## Description

### TECHNICAL FIELD

The present disclosure relates generally to cable modem systems; and more specifically, to apparatus for configuring one or more communication-related parameters in cable modem systems. Moreover, the present disclosure relates to methods of configuring one or more communication-related parameters in cable modem systems, via an apparatus.

### BACKGROUND

Today, cable modem systems are widely used to provide an Internet connection in buildings, where Hybrid Fibre Coax (HFC) cables are already in place for cable television. A cable modem system employs a Cable Modem Termination System (CMTS) to provide the Internet connection to a plurality of cable modems.

Configuring the CMTS and other devices such as amplifiers, optical receivers etc. in the cable television networks, for example, during an installation phase or at a later time when changes take place in a setup of the cable modem system, is typically a manual process, and therefore, is prone to human errors. Thus, installation and configuration of the CMTS and related devices requires expertise.

Typically, a person installing and/or configuring the CMTS and related devices has to perform one or more measurements in a cable television network to find which channels are free, and to set levels of signals accordingly. Moreover, the person has to organize and adjust channels manually.

US 6,570,913 discloses a CMTS implemented with a headend comprising a spectrum analyser arranged to determine noise-free bands available for upstream data transmission and compare them to the upstream channel capacity requirements. Once a free band has been located, the CMTS assigns its frequency to an upstream channel and signals the cable modem of the frequency update.

US 2005/114879 discloses a method for monitoring signal quality on a cable network, wherein a plurality of set-top-boxes (STB) connected to the cable network monitor and collect information about signal quality and send this information to the headend in response to a query.

EP 1359696 discloses a CMTS implemented with a headend and comprising a processing core for analysing and impairing the upstream CMTS channels between the CMTS and cable modems.

### SUMMARY

The present disclosure seeks to provide an apparatus as recited in claim 1 for automatically configuring one or more communication-related parameters in a cable modem system.

Moreover, the present disclosure seeks to provide a method of configuring one or more communication-related parameters in a cable modem system as recited in claim 5.

In one aspect, an embodiment of the present disclosure provides an apparatus for configuring one or more communication-related parameters in a cable modem system. A typical apparatus comprises a processor, a memory coupled to the processor, a cable television signal input interface for receiving one or more cable television signals, a spectrum analyser for analysing a spectrum of signals, and a cable modem termination system unit for providing access to a communication network.

In another aspect, an embodiment of the present disclosure provides a method for configuring one or more communication-related parameters in a cable modem system, via an apparatus. A typical method comprises
- analysing a spectrum of signals from a cable television signal input interface to determine one or more free frequency bands that are unallocated in the spectrum; and
- allocating at least one of the one or more free frequency bands for transmission of at least one cable modem termination system signal between the apparatus and at least one cable modem in the cable modem system.

### BRIEF DESCRIPTION OF THE DRAWINGS

- Fig. 1: is a schematic illustration of an example environment that is suitable for practicing embodiments of the present disclosure;
- Fig. 2: is a schematic illustration of an apparatus for configuring one or more communication-related parameters in a cable modem system, in accordance with an embodiment of the present disclosure;
- Figs. 3A and 3B: are illustrations of an example setup, before one or more communication-related parameters are configured for downstream signals, in accordance with an embodiment of the present disclosure;
- Figs. 4A and 4B: are illustrations of the example setup, after the one or more communication-related parameters are configured for the downstream signals, in accordance with an embodiment of the present disclosure;
- Figs. 5A and 5B: are illustrations of an example setup, before and after one or more communication-related parameters are configured for upstream signals, respectively, in accordance with an embodiment of the present disclosure; and
- Fig. 6: is an illustration of steps of a method for configuring one or more communication-related parameters in a cable modem system, via the apparatus, in accordance with an embodiment of the present disclosure.

### DETAILED DESCRIPTION OF THE INVENTION

An embodiment of the present disclosure provides an apparatus for configuring one or more communication-related parameters in a cable modem system. A typical apparatus comprises a processor, a memory coupled to the processor, a cable television signal input interface for receiving one or more cable television signals, a spectrum analyser for analysing a spectrum of signals, and a cable modem termination system unit for providing access to a communication network.

Embodiments of the present disclosure substantially eliminate or at least partially address the aforementioned problems in the prior art, and facilitate an automatic configuration of communication-related parameters in cable modem systems. Indeed, the apparatus is part of a cable modem system typically located or installed between a cable television network segment (also called a cable television segment), the communication network and a cable television network. The cable modem network segment is used to connect one or more cable modems to the apparatus and the communication network is used to connect the apparatus to for example Internet services. The cable modem termination system unit of the apparatus is thus used to provide Internet connection to the connected cable modems. The apparatus is also used to provide a cable television signal to the cable television network segment from the cable television network. The cable television signal (also called television signal) is typically received by a television set connected to the cable television network segment. Often in cable modem systems the cable television signals are prioritized as a service over Internet services and thus should not be changed (if changed television sets connected to the cable television segment have to be re-programmed to find new channels). Since both the communication via cable modem termination system unit and the cable television signals go via the apparatus, the apparatus can be used to analyse cable television signals to find appropriate slots for the Internet communication. The apparatus comprises a memory coupled to the processor. The memory stores a first computer-readable program code that, when executed on the processor, is configured to configure the communication related parameters.

According to the present invention, the spectrum analyser of the apparatus is configured to analyse the spectrum of signals to determine one or more free frequency bands that are unallocated in the spectrum of signals. The spectrum of signals is received from the cable television system via the cable television signal input interface of the apparatus. The spectrum of signals may be for example in range of 50 MHz to 900 MHz with a 8 MHz bandwidth per channel or band. Unallocated i.e. free frequency bands are bands that have no television content or other transmission.

According to the present invention, a second computer-readable program code stored in the memory of the apparatus is configured to allocate at least one of the one or more free frequency bands for a cable modem termination system signal between the apparatus and the at least one cable modem. The free frequency bands can be used for Internet and other data traffic between the cable mode termination system and at least one cable modem.

Optionally the memory stores a third computer-readable program code that, when executed on the processor, is configured to send a request to at least one cable modem to measure a signal strength of a signal received by the at least one cable modem, to receive one or more signal strength measurements from the at least one cable modem, and to adjust the one or more communication-related parameters to be used for communication with the at least one cable modem, based at least partially on the one or more signal strength measurements.

The first computer-readable program code, the second computer-readable program code and the third computer-readable program code can be separate programs running in the apparatus or they can be combined to run as a single program.

The one or more signal strength measurements pertain to at least two different frequencies. Optionally, the one or more signal strength measurements pertain, at least, to one or more low frequencies and one or more high frequencies. Additionally, optionally, the one or more signal strength measurements pertain to one or more medium frequencies, namely frequencies intermediate between the one or more low frequencies and the one or more high frequencies. The one or more low frequencies may, for example, range from 50 MHz to 300 MHz. The one or more high frequencies may, for example, range from 600 MHz to 900 MHz.

Optionally, the one or more communication-related parameters are adjusted based at least partially on the one or more signal strength measurements. Beneficially, the one or more communication-related parameters are adjusted automatically. As a result, chances of manual mistakes during configuration of the apparatus are potentially prevented. Additional benefits include that the apparatus can be configured to self-configure to the network. Optionally, the one or more communication-related parameters comprise at least one of: gain, slope, amplification, and/or Signal-to-Noise ratio (S/N).

The gain is generally defined as a ratio of a power delivered to an output to a power available from an input. In an example, an amplifier can be taken as the input of the apparatus, while a diplexer can be taken as the output of the apparatus. The gain is generally expressed in decibels (dB).

In a typical coaxial cable, signal losses are greater at high frequencies than at low frequencies. Thus, in order to provide a homogeneous signal, an amplifier should amplify low frequency signals less than high frequency signals. This is called a "slope correction". In order to achieve proper slope correction, it is advantageous to determine how much the gain for low frequencies should be lower than the gain for high frequencies. This is called a "slope adjust". The slope adjust is generally expressed as difference in amplification (decibels (dB)) between the lowest frequency and the highest frequency of a cable television (CATV) system.

The Signal-to-Noise ratio (S/N) is defined as a ratio of a power of a signal to a power of a noise. The S/N is a measurement of how many times the power of the signal is greater than the power of the noise. The S/N is usually expressed in decibels (dB).

Moreover, optionally, the apparatus also comprises a programmable controllable switch for switching ON/OFF the one or more cable television signals.

Furthermore, optionally, the apparatus conforms to Data Over Cable Service Interface Specification (DOCSIS) standard.

Moreover, optionally, the apparatus also includes an attenuator. The aim of the attenuator is to attenuate signals received from the cable modems. The attenuating can be done automatically based on instructions from the processor of the apparatus.

In another aspect, an embodiment of the present disclosure provides a method for configuring one or more communication-related parameters in a cable modem system, via an apparatus. A typical method comprises
- analysing a spectrum of signals from a cable television signal input interface to determine one or more free frequency bands that are unallocated in the spectrum; and
- allocating at least one of the one or more free frequency bands for transmission of at least one cable modem termination system signal between the apparatus and at least one cable modem in the cable modem system.

According to an embodiment, the apparatus is the apparatus as described above. The method thus allows to dynamically allocate frequency bands for communication between the apparatus and at least one cable modem. Thus the method allows automatic configuration of the network and automatic adaptation to possible changes in the cable television signal. This avoids man made errors and improves availability of the system. The method allows to reduce the time lag between changes made in the cable television and reconfiguration of transmission parameters between the apparatus and at least one cable modem,

Optionally, the communication-related parameters used in the method comprise at least one of: gain, slope, amplification, signal-to-noise ratio.

Optionally, the method further comprises one or more signal strength measurements wherein the one or more signal strength measurements pertain to at least two different frequencies. The one or more signal strength measurements can be related to the cable modem signal levels and/or strengths.

According to the present invention, the method includes one or more optional steps of analysing a spectrum of signals to determine one or more free frequency bands that are unallocated in the spectrum, and allocating at least one of the one or more free frequency bands for transmission of at least one transport stream between the apparatus and the at least one cable modem.

According to an embodiment, the one or more communication-related parameters are adjusted automatically. The method may yet further comprise allocating at least one of the one or more free frequency bands for transmission of at least one transport stream between the apparatus and the at least one cable modem. The method can also comprise switching OFF one or more cable television signals when making one or more signal strength measurements and/or analysing the spectrum.

An example of an environment that is suitable for practicing embodiments of the present disclosure is an environment including a cable television (CATV) system, a communication network, one or more apparatus(es) for configuring communication-related parameters according to this description, a cable television (CATV) network segment, a plurality of cable modems, a plurality of television (TV) sets, and a plurality of computing devices. The CATV network segment includes cables for connectivity, passive and active radio frequency components, wall outlets, splitters, tappers etc.

The present apparatus may be connected to the CATV system, for example, via a digital/analogue interface. The apparatus is operable to receive one or more CATV signals broadcasted by the CATV system.

The apparatus may be connected to the communication network, for example, via a network interface. The communication network can be a collection of individual networks, interconnected with each other and functioning as a single large network. Such individual networks may be wired, wireless, or a combination thereof. Examples of such individual networks include, but are not limited to, Local Area Networks (LANs), Wide Area Networks (WANs), Metropolitan Area Networks (MANs), Wireless LANs (WLANs), Wireless WANs (WWANs), Wireless MANs (WMANs). An example of the communication network is the Internet.

Optionally, the environment also includes one or more servers that are accessible via the communication network. The server may, for example, be running a web service that may be accessed by users associated with the computing devices.

Optionally, the apparatus is operable to receive data packets from the server, via the communication network. Optionally, the apparatus is operable to convert the data packets into data signals that are suitable for transmission over Hybrid Fibre Coax (HFC) cables.

According to an embodiment, the apparatus is connected to a cable television network segment (with elements such as splitters, cables, tappers), which provides a connection to cable modems. Computing devices such as computers, tablet computers, game consoles, smart phones or smart televisions are connected to the cable modem in order to get a data connection. The apparatus is further connected to a communication network such as Internet. The CMTS unit of the apparatus is used to facilitate Internet data connection between the communication network and the cable modems connected to the CATV network segment. Further, the television signal is received from the CATV network and is fed via the apparatus to the CATV network segment. The television sets can be connected to CATV the network segment for providing television services.

The cable modems can be also connected to their respective TV sets, and to their respective computing devices of the TV sets. Connections between TV sets and the cable modems can be provided by coaxial cables or HFC cables or as wired or wireless data connection. The connections between the cable modems and their respective computing devices can thus be either wired or wireless. Further there might be communication devices such as routers between the cable modems and the computing devices.

In a downstream path from the apparatus to the cable modem, the CATV network segment may receive signals from the present apparatus, and feed these signals to the cable modems via HFC or coaxial cable or similar connectivity. Optionally, in the downstream path, the signals include the one or more CATV signals and/or one or more data signals pertaining to data downloaded via the communication network. A frequency range of 50 MHz to 1000 MHz might be used for the downstream path communication.

Upon receiving the one or more CATV signals from the present apparatus, the cable modems may provide their respective TV sets with TV-related information, either directly or via a TV decoder box. This enables the TV sets to provide their users with TV content for viewing. In an example setup, the cable modem is used only for the data connection. The data connection can be for example an Internet Protocol connection. Television related information can be derived from the information in a cable television signal of each television channel or channel bundle. An example of such information might be a Digital Video Broadcasting for cable television (DVB-C) channel guide.

Likewise, upon receiving the one or more data signals from the present apparatus, the cable modems can provide their respective computing devices with data downloaded, for example via the communication network, by their respective computing devices.

In an upstream path from the cable modem to the apparatus, the cable television network segment combines signals from the cable modems, and feeds these signals to the apparatus. Optionally, in the upstream path, the signal(s) includes one or more data signals pertaining to data uploaded by at least one of the computing devices.

Examples of the computing devices include, but are not limited to, smart telephones, Mobile Internet Devices (MID's), tablet computers, Ultra-Mobile Personal Computers (UMPC's), phablet computers, Personal Digital Assistants (PDA's), web pads, laptops, Personal Computers (PC's), handheld PC's, and Internet Protocol (IP) TV receivers or smart televisions.

In an example, the environment could be implemented in a hotel TV and Internet system. In this example, a plurality of cable modems, could be installed in a plurality of hotel rooms. Most typically, there is one cable modem per room.

In another example, the environment could be implemented in a TV and Internet system for households with a plurality of apartments within a building. In this example, a plurality of cable modems could be installed in the plurality of apartments. Most typically, there is one cable modem per apartment.

The CMTS (cable modem termination system) unit of the present description may comprise a CMTS downstream unit and a CMTS upstream unit. Additionally, optionally, the apparatus of the present description comprises also a combiner, a diplex filter (also known as a diplexer), an attenuator, and one or more amplifiers. The memory, the spectrum analyser, the CMTS unit and the programmable controllable switch (when used) can be coupled to the processor.

According to one embodiment, the CATV signal input interface receives one or more CATV signals from a CATV system. The one or more CATV signals are then amplified by the amplifier, and fed to the spectrum analyser. The CMTS unit can be operable to receive data packets, via a communication network. Optionally, the CMTS downstream unit is operable to convert the data packets into downstream data signals that are suitable for transmission over HFC cables within the CATV network segment. The CMTS downstream unit is then operable to transmit the downstream data signals to the amplifier, which amplifies the downstream data signals and feeds the amplified data signals to the combiner.

The combiner combines the amplified data signals to the one or more CATV signals to produce combined signals. The combiner then feeds these combined signals to the amplifier and the amplifier then amplifies the combined signals and feeds them through the diplexer for transmission to the cable modem system, namely, one or more cable modems that are communicably coupled to the apparatus, for example, via a cable television network segment.

Moreover, the CMTS upstream unit can be operable to receive one or more upstream data signals from the one or more cable modems, via a diplexer and an attenuator. The diplexer enables bi-directional communication, namely transmission of downstream and upstream data signals, over a single HFC cable. The attenuator attenuates the one or more upstream data signals, and feeds the attenuated data signals to the CMTS upstream unit.

The CMTS upstream unit is then, in this embodiment, operable to convert these data signals into data packets that are suitable for transmission over the communication network. The data packets include, but are not limited to, Internet Protocol (IP) packets. Subsequently, the CMTS unit is operable to transmit the data packets across the communication network.

Moreover, optionally, the processor is operable to use communication capabilities of the CMTS unit to communicate with one or more servers over the communication network. In an example, the processor is operable to receive information, for example, including software updates and/or settings over the communication network.

Additionally or alternatively, optionally, the processor is operable to use communication capabilities of the CMTS unit to communicate with the one or more cable modems, as will be elucidated below.

The optional third computer-readable program code may thus be configured to send the request to at least one of the cable modems via the CMTS downstream unit, and to receive one or more signal strength measurements from the cable modems via the CMTS upstream unit.

Moreover, this optional third computer-readable program code is configured to adjust the communication-related parameters to be used for communication with the cable modems, namely, for communication between the CMTS unit and the cable modems.

Optionally, the processor controls at least one of the amplifiers or adjustable attenuators to adjust at least one of the one or more communication-related parameters for downstream signals. Optionally, the processor controls the attenuator to adjust at least one of the one or more communication-related parameters for upstream signals.

Optionally, the memory stores at least one of: the one or more signal strength measurements, configurations of the one or more communication-related parameters, and/or other software associated with the cable modem system.

Moreover, the spectrum analyser is operable to analyse a spectrum of signals that is incoming from the CATV signal input interface.

Moreover, optionally, the switch is programmed and controlled by the processor to switch OFF the one or more CATV signals received from the CATV system, during the analysis of the spectrum by the spectrum analyser. The one or more CATV signals can be optionally switched OFF during measurement by the spectrum analyser to measure high and low frequencies that are possibly allocated by the CATV system for transporting the one or more CATV signals. The switch can refer to a programmable controllable radio frequency (RF) switch which can be used to turn the RF signal ON or OFF.

Further, optionally, the switch is programmed and controlled by the processor to switch OFF the one or more CATV signals received from the CATV system, during the measurement of downstream signal strengths from the cable modems connected to CATV network segment.

Optionally, in an alternative implementation, an optical receiver of the apparatus is controlled by the processor to switch OFF the one or more CATV signals, during the analysis of the spectrum and/or measurement of downstream signal strength from the cable modems.

Optionally, the spectrum analyser and/or the processor are operable to determine one or more free frequency bands that are unallocated in the spectrum, based upon the analysis of the spectrum.

The second computer-readable program code is configured to allocate at least one of the free frequency bands for transmission of at least one transport stream between the apparatus and the one or more cable modems. In an example, the at least one of the one or more free frequency bands is allocated for transmission of one or more downstream data signals from the CMTS unit to the one or more cable modems and/or one or more upstream data signals from the one or more cable modems to the CMTS unit.

According to an embodiment, steps for adjusting communication parameters for improving signal to noise (S/N) ratio of a cable modem system comprises the below steps 1-6.

In Step 1: A cable modem system setup / configuration starts typically with a registration phase. During the registration phase a set of parameters of each cable modems i = 1...N are collected by the apparatus. One of the parameters is a potential maximum transmit level (TxLMaxᵢ) of a cable modem i. This way the apparatus obtains information of a maximum signal power that is expected from at least one of the cable modems.

In Step 2: Cable modems are configured with the apparatus of the present description so that upstream input level from each of the cable modems i = 1...N is substantially similar to each other. For example, an input level target could be set to TxT = 70 dBuV. Alternatively the input level target could be set within range of 65 dBuV to 75 dBuV. In practice this can be done by requesting each of the cable modems i = 1...N to increase or decrease the transmission level (TxLᵢ) or to set the transmission level to a certain value one by one.

In Step 3: The apparatus sends a request to the cable modems (i = 1...N) to communicate the current transmission level (TxLᵢ) of each of the modems i.

In Step 4: For each of the cable modem i, the transmit level margin (TxMᵢ) is calculated as TxMᵢ = TxLMaxᵢ-TxLᵢ.

In Step 5: The values TxMᵢ are analysed to find the smallest transmit level margin TxMₘᵢₙ.

In Step 6: The apparatus adjusts the Signal-to-Noise ratio (S/N) automatically, by adjusting an attenuation of the attenuator automatically. The attenuator is adjusted to attenuate with TxMₘᵢₙ. This leads to a decrease in the input level of the upstream signal by TxMₘᵢₙ.

In Step 7: The apparatus re-configures cable modems i so that the upstream input level from each cable modem to the apparatus is substantially similar to each other. In practice this can be done by requesting a cable modem to increase or decrease the transmission level (TxLᵢ) or to set the transmission level to a certain level.

The aforementioned S/N improvement is based on a fact that the power of the noise is typically constant, irrespective of the power of the upstream signals. In other words, the power of the noise does not rise when the power of the upstream signals is increased. Thus, increasing the power of the upstream signals improves the S/N considerably.

Embodiments of the present disclosure are susceptible to being used for various purposes, including, though not limited to, facilitating an automatic configuration of communication-related parameters in cable modem systems. Embodiments of the present disclosure also provide a computer program product comprising a non-transitory computer-readable data storage medium having stored thereon computer-readable program code, which is executable by a processor of an apparatus to implement the method as described above.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### DETAILED DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

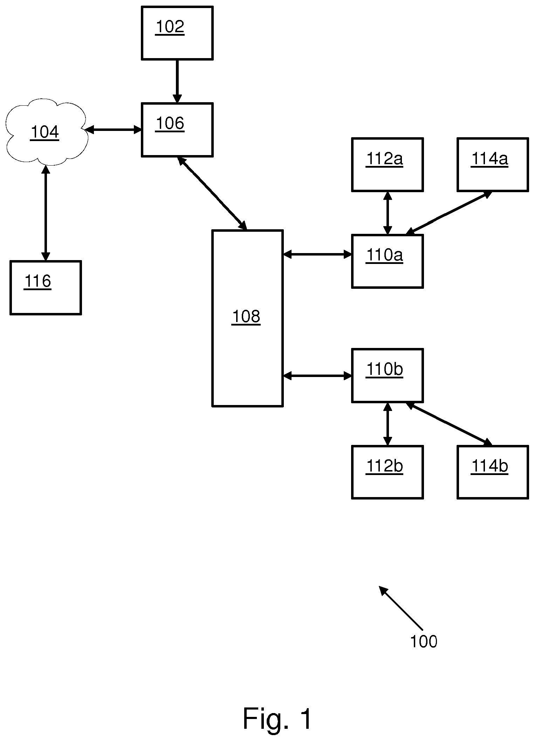

Embodiments of the present disclosure will now be described, by way of example only, with reference to the following diagrams wherein Fig. 1 is a schematic illustration of an example environment **100** that is suitable for practicing embodiments of the present disclosure. The environment **100** includes a cable television (CATV) system **102,** a communication network **104,** one apparatus **106** for configuring communication-related parameters, a cable television (CATV) network segment **108,** a plurality of cable modems, depicted as a cable modem **110a** and a cable modem **110b** in Fig. 1 (hereinafter collectively referred to as cable modems **110**), a plurality of television (TV) sets, depicted as a TV set **112a** and a TV set **112b** in Fig. 1 (hereinafter collectively referred to as TV sets **112**), a plurality of computing devices, depicted as a computing device **114a** and a computing device **114b** in Fig. 1 (hereinafter collectively referred to as computing devices **114**).

The apparatus **106** is connected to the CATV system **102** via a digital/analogue interface and it is operable to receive one or more CATV signals broadcasted by the CATV system **102.** The apparatus **106** is connected to the communication network **104** via a network interface. The environment **100** also includes one server **116** that is accessible via the communication network **104.** The apparatus **106** is connected to the CATV network segment **108,** which is connected to the cable modems **110.** The cable modems **110** are connected to their respective TV sets **112,** and to their respective computing devices **114.** In a downstream path, the CATV network segment **108** receives signals from the apparatus **106,** and feeds these signals to the cable modems **110.**

Upon receiving the one or more CATV signals from the apparatus **106,** the cable modems **110** provide their respective TV sets **112** with TV-related information, either directly or via a TV decoder box. This enables the TV sets **112** to provide their users with TV content for viewing. Likewise, upon receiving the one or more data signals from the apparatus **106,** the cable modems **110** provide their respective computing devices **114** with data downloaded, via the communication network **104,** by their respective computing devices **114.**

In an upstream path, the CATV network segment **108** receives signals from the cable modems **110,** and feeds these signals to the apparatus **106.**

Fig. 1 is merely an example, which should not unduly limit the scope of the claims herein. It is to be understood that the specific designation for the environment **100** is provided as an example and is not to be construed as limiting the environment **100** to specific numbers, types, or arrangements of CATV systems, apparatus, CATV network segment, cable modems, TV sets, computing devices, servers, and communication networks. A person skilled in the art will recognize many variations, alternatives, and modifications of embodiments of the present disclosure.

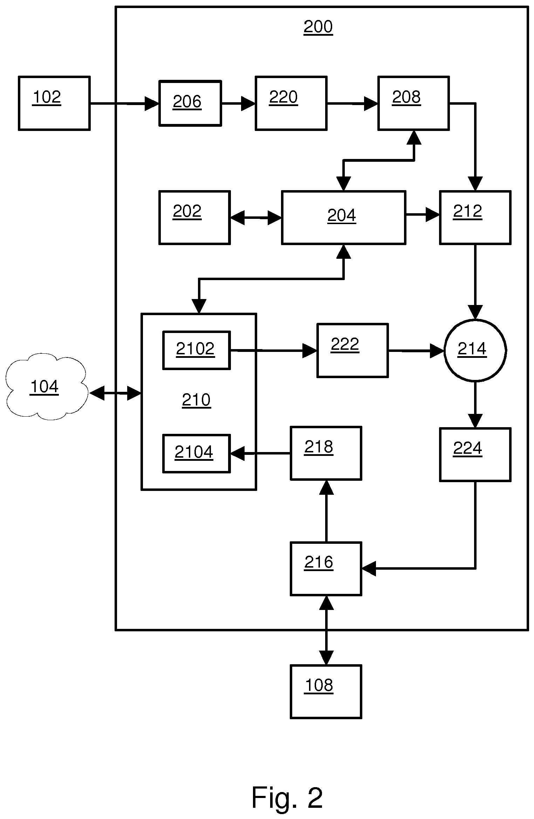

Fig. 2 is a schematic illustration of an apparatus **200** for configuring one or more communication-related parameters in a cable modem system, in accordance with an embodiment of the present disclosure.

The apparatus **200** includes a memory **202,** a processor **204,** a CATV signal input interface **206** in connection with a CATV system **102,** a spectrum analyser **208,** and a Cable Modem Termination System (CMTS) unit **210.** The apparatus **200** also includes a programmable controllable RF (radio frequency) switch 212.

The CMTS unit **210** includes a CMTS downstream unit **2102** and a CMTS upstream unit **2104** and it is in connection with a communication network **104.**

The apparatus **200** also includes a combiner **214,** a diplex filter **216** which is communicably coupled to the present apparatus via a CATV network segment **108,** an attenuator **218,** and one or more amplifiers, depicted as an amplifier **220,** an amplifier **222** and an amplifier **224.**

The memory **202,** the spectrum analyser **208,** the CMTS unit **210** and the programmable controllable RF switch **212** are controllable by the processor **204.**

Fig. 2 is merely an example, which should not unduly limit the scope of the claims herein. A person skilled in the art will recognize many variations, alternatives, and modifications of embodiments of the present disclosure.

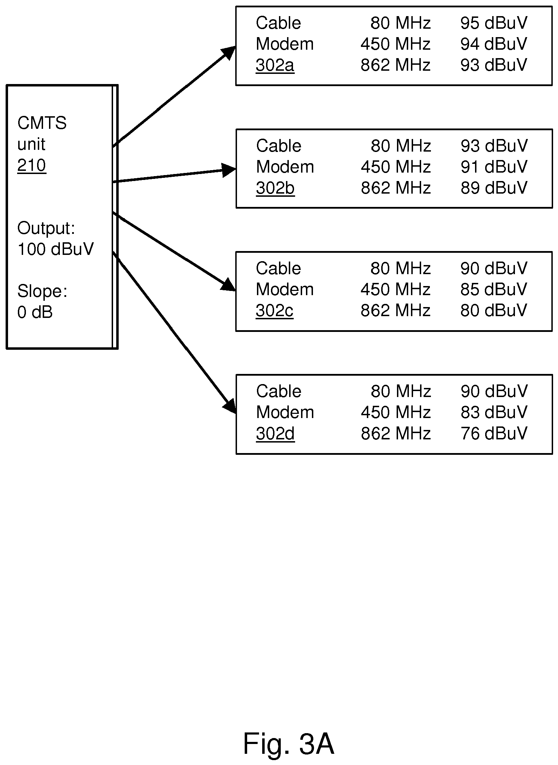

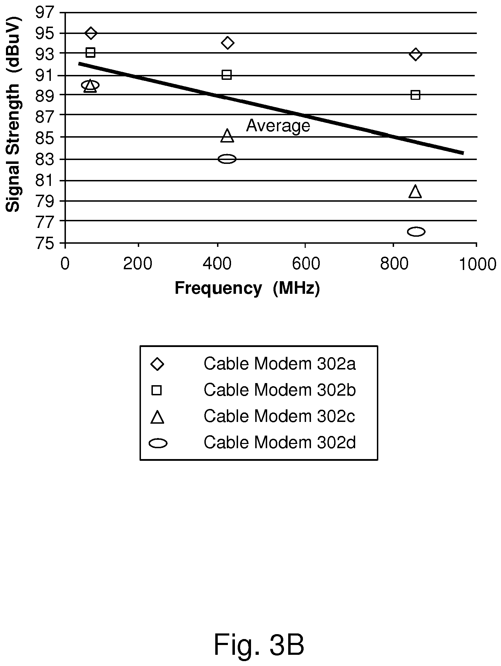

Figs. 3A and 3B are illustrations of an example setup, before one or more communication-related parameters are configured for downstream signals, in accordance with an embodiment of the present disclosure. With reference to Fig. 3A, the CMTS unit **210** of the apparatus **200** is communicably coupled to four cable modems, namely, cable modems **302a, 302b, 302c** and **302d** (hereinafter collectively referred to as cable modems **302**).

In the example setup, the CMTS unit **210** sends a request to the cable modems **302** to measure signal strengths of signals received at frequencies 80 MHz, 450 MHz and 862 MHz.

Initially, an output signal level of the apparatus **200** is set to 100 dBuV, and a slope is set to zero dB (0 dB).

Figs. 3A and 3B show signal strength measurements taken by the cable modems **302,** in tabular and graphical forms, respectively.

As described earlier, the apparatus **200** is operable to adjust the gain and the slope automatically, based on the signal strength measurements taken by the cable modems **302.**

For illustration purposes only, there will now be considered an example where a desired input level for the cable modems **302** is 95 dBuV, and a frequency response is substantially flat for all frequencies. Consequently, the gain is adjusted to be +3 dB, and the slope is adjusted to be +9 dB.

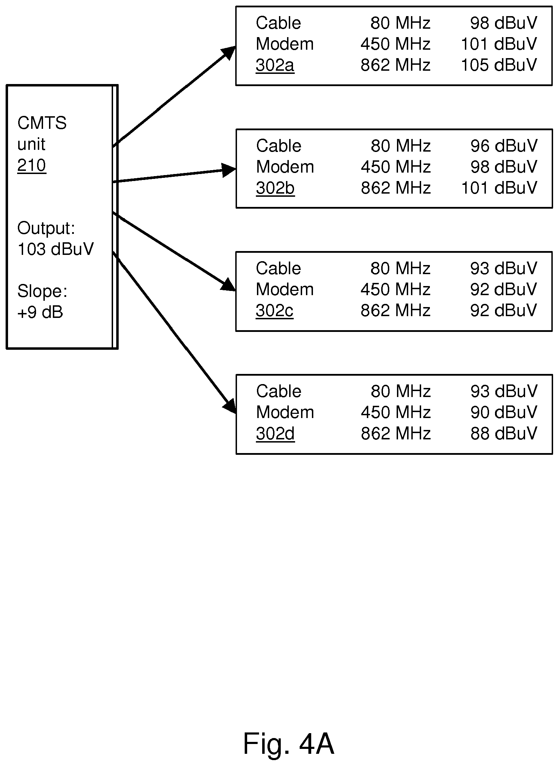

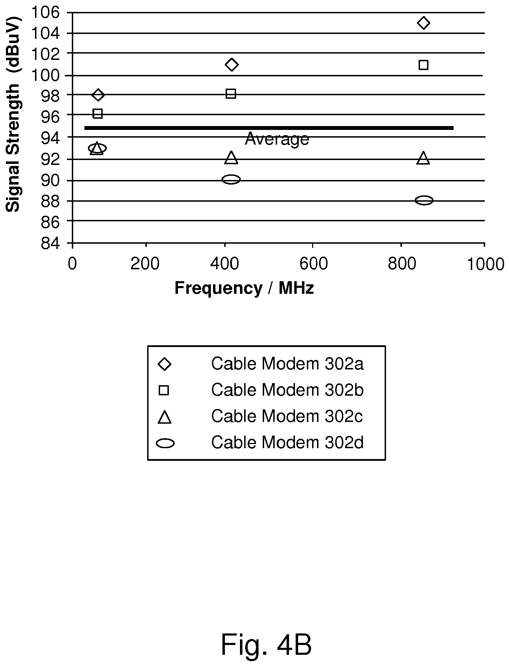

Figs. 4A and 4B are illustrations of the example setup, after the one or more communication-related parameters are configured for the downstream signals, in accordance with an embodiment of the present disclosure. Figs. 4A and 4B show signal strength measurements taken by the cable modems **302,** in tabular and graphical forms, respectively. These signal strength measurements are taken after the gain and the slope are adjusted automatically by the apparatus **200.**

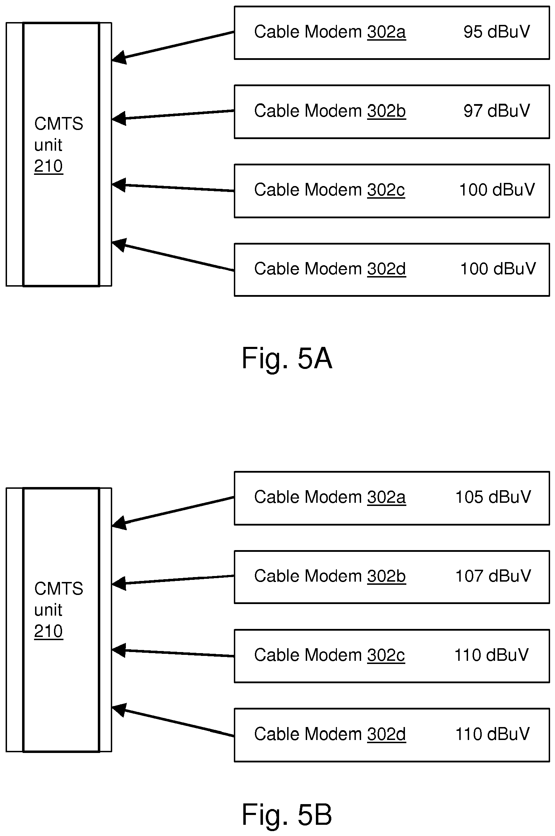

Figs. 5A and 5B are illustrations of the example setup, before and after one or more communication-related parameters are configured for upstream signals, respectively, in accordance with an embodiment of the present disclosure.

Below is an example of steps for adjusting communication parameters to improve the signal to noise (S/N) ration of a cable modem system related to Figs. 5A and 5B.
Step 1: Cable modem system setup / configuration starts with a registration phase, during which a set of parameters of each cable modem **302a-302d** (i = 1, 2, 3, 4 for 302a, 302b, 302c and 302d respectively) are collected by the CMTS unit **210.** One of the parameters is a potential maximum transmit level (TxLMaxᵢ) of a cable modem i. This way the apparatus **200** obtains information of a maximum signal power that is expected from at least one of the cable modems **302.** In the present example, a maximum transmit level of a modem i is 110 dBuV (decibel micro volts). In the present example, the maximum transmit level is same for all of the modems i=1,2,3,4.
Step 2: The CMTS unit **210** configures cable modems so that the CMTS unit **210** input level from each of the cable modems i = 1...4 is substantially similar to each other. For example, the input level target is set to TxT = 70 dBuV.
Step 3: The CMTS unit **210** sends a request to first cable modem (i=1) to communicate the current transmission level (TxL₁) of the modem 1. This step is repeated to all cable modems that are connected to the apparatus. Fig. 5A is an illustration of the current transmission levels TxLᵢ for the cable modems **302** in a tabular form. The measured transmission levels in the present example for modems **302a-d** are TxL₁ = 95 dBuV, TxL₂ = 97 dBuV, TxL₃ = 100 dBuV, TxL₄ = 100 dBuV, respectively.
Step 4: For each of the cable modem i, a transmit level margin (TxMᵢ) is calculated as TxMᵢ = TxLMaxᵢ-TxLᵢ. The calculated transmit level margins in the present example for modems **302a-d** are TxMᵢ = 15 dBuV, TxM₂ = 13 dBuV, TxM₃ = 10 dBuV, TxM₄ = 10 dBuV, respectively.
Step 5: TxMᵢ are analysed to find the smallest transmit level margin TxMₘᵢₙ In the present example the smallest transmit level margin TxMₘᵢₙ = 10 dBuV.
Step 6: The apparatus **200** adjusts the Signal-to-Noise ratio (S/N) automatically by adjusting an attenuation of the attenuator **218** automatically. The attenuator **218** is adjusted to attenuate with TxMₘᵢₙ = 10dBuV. This leads to decrease in the input level of the CMTS unit **210** by 10 dBuV.
Step 7: The CMTS unit **210** re-configures cable modems i=1, 2, 3, 4 so that the CMTS unit **210** input level from each cable modem is substantially similar to each other. In present example, the transmission levels of the modems **302a-d** are set to TxL₁ = 105 dBuV, TxL₂ = 107 dBuV, TxL₃ = 110 dBuV, TxL₄ = 110 dBuV, respectively. As a result, the Signal-to-Noise ratio (S/N) improves by +10 dB.

Fig. 5B shows actual power measurements taken from the cable modems **302,** after the Signal-to-Noise ratio (S/N) is improved.

Figs. 3A-B, 4A-B and 5A-B are merely examples, which should not unduly limit the scope of the claims herein. A person skilled in the art will recognize many variations, alternatives, and modifications of embodiments of the present disclosure.

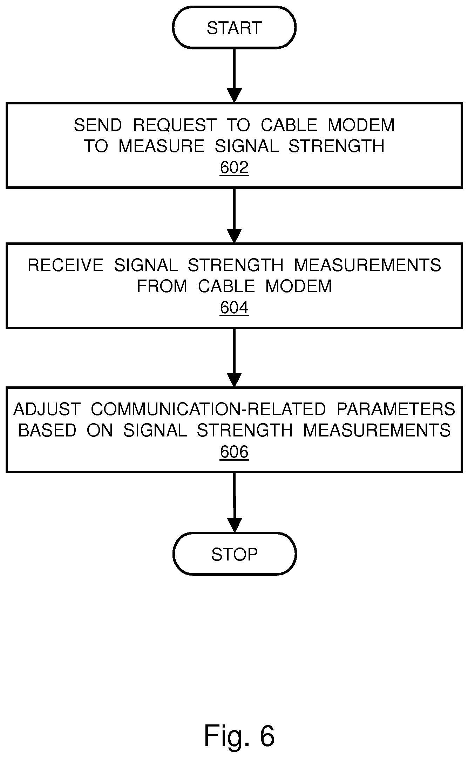

Fig. 6 is an illustration of steps of a method of configuring one or more communication-related parameters in a cable modem system, via an apparatus, in accordance with an embodiment of the present disclosure. The method is depicted as a collection of steps in a logical flow diagram, which represents a sequence of steps that can be implemented in hardware, software, or a combination thereof.

At step **602,** the apparatus sends a request to at least one cable modem to measure a signal strength of a signal received by the at least one cable modem. At step **604,** the apparatus receives one or more signal strength measurements from the at least one cable modem.

Subsequently, at step **606,** the apparatus adjusts the one or more communication-related parameters to be used for communication with the at least one cable modem.

In accordance with the step **606,** the one or more communication-related parameters are adjusted based at least partially on the one or more signal strength measurements received at the step **604.** The adjustment is done preferably after making at least two measurements as in step **606.**

The step **606** is performed automatically. Optionally, the steps **602** to **606** are performed automatically.

The steps **602** to **606** are only illustrative and other alternatives can also be provided where one or more steps are added, one or more steps are removed, or one or more steps are provided in a different sequence without departing from the scope of the claims herein.

## Claims

1. An apparatus (106, 200) for configuring one or more communication-related parameters in a cable modem system, the apparatus (106, 200) comprising:
- a cable television signal input interface (206) for receiving one or more cable television downstream signals from a cable television system (102);
- a spectrum analyser (208) for analysing a spectrum of the downstream signals to determine one or more free frequency bands that are unallocated in the spectrum of the downstream signals;
- an output interface for transmitting the downstream signals towards a cable modem network segment (108) connected to one or more cable modems (110, 302);
- a cable modem termination system unit (210) for providing access to a communication network (104);
- a processor (204);
- a memory (202) coupled to the processor (204), said memory storing
a first computer-readable program code that, when executed on the processor, is configured to configure the communication related parameters; and
a second computer-readable program code, when executed on the processor, is configured to allocate at least one of the one or more free frequency bands for transmission of a cable modem termination system signal between the output interface of the apparatus (106, 200) and the at least one cable modem (110, 302).

2. An apparatus (106, 200) according to claim 1, further comprising a programmable controllable switch (212) for switching ON/OFF the one or more cable television signals.

3. An apparatus (106, 200) according to any of preceding claims, wherein the apparatus (106, 200) conforms to Data Over Cable Service Interface Specification.

4. An apparatus (106, 200) according to any of the preceding claims, wherein the apparatus (106, 200) further comprises an attenuator.

5. A method for configuring one or more communication-related parameters in a cable modem system, via an apparatus connected between a cable television system and a cable modem network segment connected to one or more cable modems, the method comprising:
- analysing a spectrum of downstream signals from a cable television signal input interface of said apparatus to determine one or more free frequency bands that are unallocated in the spectrum of the downstream signals;
and
- allocating at least one of the one or more free frequency bands for transmission of at least one cable modem termination system signal between the apparatus and at least one cable modem in the cable modem system.

6. A method according to claim 5, further comprising switching OFF one or more cable television signals when making one or more signal strength measurements and/or analysing the spectrum.

## Patentansprüche

1. Vorrichtung (106, 200) zum Konfigurieren eines oder mehrerer kommunikationsbezogener Parameter in einem Kabelmodemsystem, wobei die Vorrichtung (106, 200) Folgendes umfasst:
- eine Kabelfernseh-Signaleingangsschnittstelle (206) zum Empfangen eines oder mehrerer Kabelfernseh-Downstream-Signale von einem Kabelfernsehsystem (102);
- einen Spektrumanalysator (208) zum Analysieren eines Spektrums der Downstream-Signale, um ein oder mehrere freie Frequenzbänder zu bestimmen, die im Spektrum der Downstream-Signale nicht zugeordnet sind;
- eine Ausgangsschnittstelle zum Übertragen der Downstream-Signale in Richtung eines Kabelmodem-Netzwerksegments (108), das mit einem oder mehreren Kabelmodems (110, 302) verbunden ist;
- eine Kabelmodem-Abschlusssystemeinheit (210) zum Bereitstellen des Zugangs zu einem Kommunikationsnetz (104);
- einen Prozessor (204):
- einen Speicher (202), der mit dem Prozessor (204) gekoppelt ist, wobei der Speicher Folgendes speichert
einen ersten computerlesbaren Programmcode, der konfiguriert ist, wenn er auf dem Prozessor ausgeführt wird, um die kommunikationsbezogenen Parameter zu konfigurieren; und
einen zweiten computerlesbaren Programmcode der konfiguriert ist, wenn er auf dem Prozessor ausgeführt wird, um mindestens eines der einen oder mehreren freien Frequenzbänder für die Übertragung eines Signals des Kabelmodem-Abschlusssystems zwischen der Ausgangsschnittstelle der Vorrichtung (106, 200) und dem mindestens einem Kabelmodem (110, 302) zuzuweisen.

2. Vorrichtung (106, 200) nach Anspruch 1, ferner umfassend einen programmierbaren steuerbaren Schalter (212) zum Ein- und Ausschalten des einen oder der mehreren Kabelfernseh-Signale.

3. Vorrichtung (106, 200) nach einem der vorhergehenden Ansprüche, wobei die Vorrichtung (106, 200) der Data Over Cable Service Interface-Spezifikation entspricht.

4. Vorrichtung (106, 200) nach einem der vorhergehenden Ansprüche, wobei die Vorrichtung (106, 200) ferner einen Dämpfer umfasst.

5. Verfahren zum Konfigurieren eines oder mehrerer kommunikationsbezogener Parameter in einem Kabelmodemsystem über eine Vorrichtung, die zwischen einem Kabelfernsehsystem und einem Kabelmodem-Netzwerksegment verbunden ist, das mit einem oder mehreren Kabelmodems verbunden ist, wobei das Verfahren Folgendes umfasst:
- Analysieren eines Spektrums von Downstream-Signalen von einer Kabelfernseh-Signaleingangsschnittstelle der Vorrichtung, um ein oder mehrere freie Frequenzbänder zu bestimmen, die im Spektrum der Downstream-Signale nicht zugeordnet sind;
und
- Zuweisen von mindestens einem der einen oder mehreren freien Frequenzbänder zur Übertragung von mindestens einem Signal des Kabelmodem-Abschlusssystems zwischen dem Gerät und mindestens einem Kabelmodem im Kabelmodemsystem.

6. Verfahren nach Anspruch 5, ferner umfassend das Ausschalten eines oder mehrerer Kabelfernseh-Signale, wenn eine oder mehrere Signalstärkemessungen durchgeführt und/oder das Spektrum analysiert werden.

## Revendications

1. Appareil (106, 200) permettant de configurer un ou plusieurs paramètres relatifs à une communication dans un système de modem câblé, l'appareil (106, 200) comprenant :
- une interface d'entrée de signal de télévision par câble (206) pour recevoir un ou plusieurs signaux de télévision par câble en aval depuis un système de télévision par câble (102) ;
- un analyseur de spectre (208) pour analyser un spectre des signaux en aval afin de déterminer une ou plusieurs bandes de fréquences libres qui ne sont pas allouées dans le spectre des signaux en aval ;
- une interface de sortie pour transmettre les signaux en aval vers un segment de réseau de modem câblé (108) connecté à un ou plusieurs modems câblés (110, 302) ;
- une unité de système de terminaison de modem câblé (210) pour fournir un accès à un réseau de communication (104) ;
- un processeur (204) ;
- une mémoire (202) couplée au processeur (204), ladite mémoire stockant
un premier code de programme lisible par ordinateur qui, lorsqu'il est exécuté sur le processeur, est configuré pour configurer les paramètres relatifs à une communication ; et
un second code de programme lisible par ordinateur qui, lorsqu'il est exécuté sur le processeur, est configuré pour allouer au moins une des une ou plusieurs bandes de fréquences libres pour la transmission d'un signal de système de terminaison de modem câblé entre l'interface de sortie de l'appareil (106, 200) et l'au moins un modem câblé (110, 302).

2. Appareil (106, 200) selon la revendication 1, comprenant en outre un commutateur pouvant être commandé programmable (212) pour activer/désactiver les un ou plusieurs signaux de télévision par câble.

3. Appareil (106, 200) selon l'une quelconque des revendications précédentes, dans lequel l'appareil (106, 200) est conforme à la spécification d'interface de service de données par câble.

4. Appareil (106, 200) selon l'une quelconque des revendications précédentes, dans lequel l'appareil (106, 200) comprend en outre un atténuateur.

5. Procédé permettant de configurer un ou plusieurs paramètres relatifs à une communication dans un système de modem câblé, par l'intermédiaire d'un appareil connecté entre un système de télévision par câble et un segment de réseau de modem câblé connecté à un ou plusieurs modems câblés, le procédé comprenant :
- l'analyse d'un spectre de signaux en aval depuis une interface d'entrée de signal de télévision par câble dudit appareil afin de déterminer une ou plusieurs bandes de fréquences libres qui ne sont pas allouées dans le spectre des signaux en aval ;
et
- l'allocation d'au moins une des une ou plusieurs bandes de fréquences libres pour la transmission d'au moins un signal de système de terminaison de modem câblé entre l'appareil et au moins un modem câblé dans le système de modem câblé.

6. Procédé selon la revendication 5, comprenant en outre la désactivation d'un ou de plusieurs signaux de télévision par câble lors de la réalisation d'une ou de plusieurs mesures d'intensité de signal et/ou de l'analyse du spectre.
